(19) Europäisches Patentamt

European Patent Office

Office européen des brevets

(11) **EP 0 872 046 B1**

(12) **EUROPEAN PATENT SPECIFICATION**

(45) Date of publication and mention
of the grant of the patent:
**21.11.2001 Bulletin 2001/47**

(51) Int Cl.⁷: **H04B 7/26**, H04Q 7/28

(21) Application number: **96928454.6**

(86) International application number:
**PCT/EP96/03564**

(22) Date of filing: **09.08.1996**

(87) International publication number:
**WO 97/07602 (27.02.1997 Gazette 1997/10)**

(54) **RADIO RESOURCE SHARING IN COMMUNICATION SYSTEMS**

FUNKKONTINGENTMITBENUTZUNG IN KOMMUNIKATIONSSYSTEMEN

PARTAGE DES RESSOURCES RADIO DANS DES SYSTEMES DE TELECOMMUNICATION

(84) Designated Contracting States:
**DE FR GB IT**

(30) Priority: **15.08.1995 GB 9516736**

(43) Date of publication of application:
**21.10.1998 Bulletin 1998/43**

(73) Proprietor: **NOKIA MOBILE PHONES LTD.**
**24101 Salo (FI)**

(72) Inventor: **RAPELI, Juha**
**FIN-90570 Oulu (FI)**

(74) Representative: **Jones, Kendra Louise et al**
**Nokia IPR Department**
**Nokia (UK) Limited**
**Summit Avenue**
**Southwood**
**Farnborough Hampshire GU14 0NZ (GB)**

(56) References cited:
**WO-A-92/00632**          **US-A- 5 040 238**

**Description**

The present invention relates to the management of radio resource sharing between primary and secondary systems.

In the context of the present invention the term radio resource means a radio frequency or frequencies at a given instant in time.

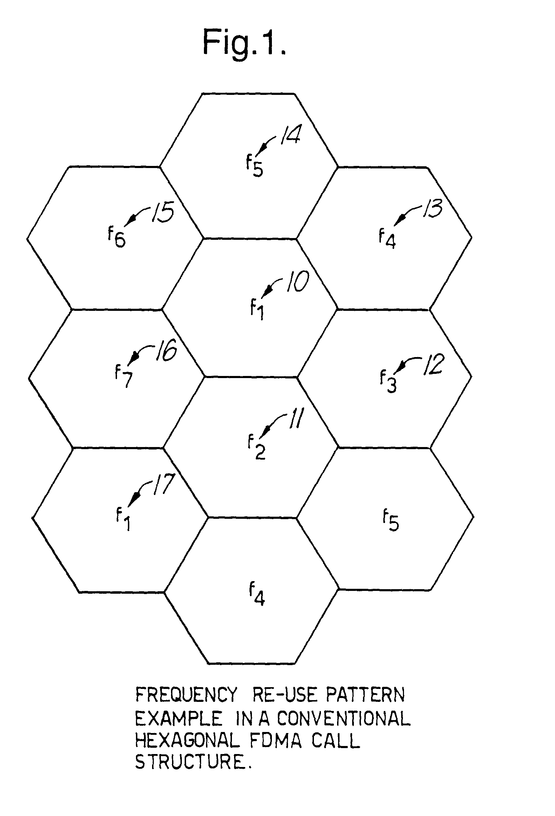

In prior art systems, such as analog frequency division multiple access (FDMA) cellular AMPS, TACS, NMT or trunked radio systems, only one user uses a channel at a time, and a frequency channel is re-used in a neighbouring cell only if there is no interface between the cells. In an hexagonal cell structure (shown in Figure 1), this results in a frequency re-use of Figure 7. This means, as Figure 1 shows, that a frequency is not re-used in the nearest neighbouring cells. As an example, when frequency $f_1$ is used in the central cell (10), the neighbouring cells (11 to 16) are using other frequencies $f_2$ to $f_7$. The frequency $f_7$ is re-used again in the cell 17. The time division multiple access, or TDMA based cellular systems, such as GSM, Digital AMPS (DAMPS) or the personal digital cellular (PDC) system used in Japan, make use of the same frequency re-use mechanism, but with the difference that re-use patterns may be allocated to each time slot of TDMA separately, and that in the frequency hopping mode, some limited usage of the same frequency within the same geographical space can be tolerated because of error correction mechanisms of the digital transmission, such as interleaving and error correction coding. Thus, TDMA systems are able to offer a better frequency re-use efficiency than analog FDMA systems. Both FDMA and TDMA systems rely heavily on planning of cell structures and frequency usage.

In systems which are more tolerable to failed efforts or delays in accessing a radio resource, a dynamic channel assignment (DCA) mechanism can be used. In DCA, a potential user of a radio resource first monitors the radio environment, assigns a free or the least interfered radio resource; and starts using it while simultaneously monitoring the interference level with a cyclical redundancy check (CRC). Should an interference occur, it is detected as CRC errors, and the continuous use of DCA as known in the art assigns to the interfered system a new radio resource if possible. DCA relies on the principle that all users apply the same mechanisms. DCA is not a suitable mechanism to provide a high certainty of access to a primary system user in the presence of a resource-sharing secondary system. Further drawbacks of the DCA known in the art stem from the fact that measures for avoiding the interference reside on the interfered system's side, and the fact that all radio connections are assumed to use a very similar power level

Known trunked radio systems, like the one described in US 5040238 (Comroe et al., Motorola, Inc.), use a centralised radio resource management system (Figure 1 in the cited document) with the objective of ensuring that all available radio resource are effectively used rather than being idle.

Thus, there is a need for an uncoordinated secondary usage of a radio resource within a cellular system which, in turn, is based on frequency planning, especially in situations where extensive communication between primary and secondary usage is not necessarily possible or economically implementable.

In a first aspect, the present invention provides a communication system, comprising:

a primary cellular radio system;

a secondary radio system located within a cell of the primary system and including a base station, a mobile station and means for calculating, in respect of a primary radio resource, secondary system power transmission parameters which would result in an acceptable level of interference (C/I) in the primary system communications in said cell.

The above-defined system provides a platform on which to manage radio resource sharing between the primary and second system. The system makes use of differences between primary and second radio resource usage, in particular with respect to radio frequency (RF) power levels and radio range, and calculates secondary system power transmission thresholds which enable calculated coexistence within a single radio resource of primary and secondary system users by maintaining a low or minimised level of mutual interference. The secondary system power transmission parameters may calculated by the secondary system using a mathematical model of the system.

The invention is particularly suitable for the implementation of a cordless access with a short radio range, also called local access, within a cellular system and cellular frequencies, a relay type of repeater base station within the primary cell, and further, for the implementation of macro cells (umbrella cells) on top of micro cells. The invention is applicable in system employing FDMA, TDMA, and frequency hopping systems as well as in providing overlay cell structure or secondary use within a spread spectrum system, such as the code division multiple access (CDMA) system.

In a second aspect, the present invention provides a method for performing radio resource management in a communication system comprising a primary cellular radio system and a secondary radio system located within a cell of the primary system, wherein the secondary system comprises a base station and a mobile station, the method involving the secondary system performing the steps of:

(i) calculating, in respect of a primary system radio resource, maximum secondary system power transmission levels which would result in an acceptable level of interference to primary system radio communications in the cell;
(ii) conducting secondary system radio communications at power transmission levels below the calculated maximum levels;
(iii) measuring the interference levels affecting the secondary system radio communications; and
(iv) discontinuing secondary system radio communication on said primary system radio resource, if the measured interference levels to secondary system radio communications exceed a permissible threshold while the secondary system is operating at the maximum secondary system power transmission levels.

If step (iv) discontinues secondary system communication, then the secondary system has ascertained that simultaneous use of a primary system radio resource is not feasible.

Preferably, the method includes the step of decoding primary system transmission parameters. Preferably, one of the decoded parameters includes a parameter or parameters ($I_{MPa}$, $I_{BPa}$) indicative of the acceptability of the interference levels in the primary system communication. This parameter is decoded by the secondary system and has a controlling effect on the calculation of maximum secondary system power transmission levels. For example, when the general interference levels in primary system communications are too high, despite secondary system calculations, the parameter or parameters indicative of the acceptability of the interference levels in the primary system communication is lowered. This has a consequential 'turning down' effect on the calculated maximum secondary system power transmission parameters in the secondary system.

The method in accordance with the invention can be employed in many radio resource management strategies.

In one strategy, the secondary system may select a primary system radio resource at random, apply steps (i) to (iv), and if the use of the radio resource is discontinued by step (iv), select a further random primary system radio resource.

In another strategy, the set of radio resources available for potential use by the secondary system may be sequentially selected and step (i) performed on each radio resource. A list can thus be compiled of each radio resource and corresponding maximum secondary system power transmission levels. The radio resource having the highest maximum secondary system power transmission levels can be selected and then steps (ii) and (iv) performed. If step (iv) discontinues the use of this radio resource, the radio resource having the next highest maximum secondary system power transmission levels can be selected and the above process repeated. Of course, with an interval depending on the precise nature of the system, the list needs to be recompiled periodically.

Either strategy set out above is suitable for TDMA systems.

The method in accordance with the invention can be applied to communication systems in which more than one secondary system occupy a single primary cell. If the secondary systems do not interfere with each other, then it can be applied directly.

When more than one secondary system is involved and there is potential interference between the secondary cells, the method can be expanded to include the steps of each secondary system:

determining the presence of other potentially interfering secondary systems;

decoding the transmission parameters of the potentially interfering systems including a parameter indicative of the acceptability of interference levels in the respective secondary systems; and

including in the calculation of secondary system maximum power transmission parameters further calculations to ensure that the calculated parameter would not also result in levels of interference greater than the decoded allowable interference levels in the other potentially interfering secondary systems.

In this way, if a given secondary system, despite calculating that the calculated maximum power transmission parameters would not result in unacceptable interference in the other secondary systems, the parameter or parameters indicative of the acceptability of interference levels in the secondary systems can be monitored and further adjustment made, if necessary.

The transmitted parameters indicative of the acceptability of interference levels in the primary or secondary systems need not be an absolute interference indicator, as in the described embodiments, but may merely indicate a direction in which the stored values of acceptable interference levels in the respective systems are increased or decreased incrementally. In such a system, the parameter may take the value -1,0,1, for example.

The expanded method can, of course, still be applied in the situation where there is one secondary system or more than one non-interfering secondary systems in a primary cell.

In a third aspect, the present invention provides a method for managing radio resources in a communication system comprising a plurality of radio systems, each comprising a base station and a mobile station, each radio system performing the steps of:

determining the presence of other potentially interfering radio systems;

decoding the transmissions of the other potentially interfering radio systems to establish their transmission parameters including at least a parameter indicative of the acceptability of interference levels affecting communications between the base and the mobile station; and

for a given radio resource, calculating maximum radio system transmission parameters which would result in an acceptable level of interference in the other potentially interfering radio system.

Said radio systems can all comprise base stations and associated mobile stations of a single cellular network, or alternatively correspond to the primary system and second secondary systems of the first and second aspects of the invention.

Other facets of the opertion of said radio systems mimic that of the secondary systems described in relation to the first and second aspects when more than one secondary systems are located in a single primary cell in potentially interfering relation with each other.

Exemplary embodiments of the invention are hereinafter described with reference to the accompanying drawings, in which:

Figure 1 shows a diagram illustrating the radio resource re-use pattern in a conventional hexagonal FDMA structure;

Figure 2 shows a diagram illustrating a first embodiment of the present invention;

Figure 3 shows a graph illustrating the feasibility the simultaneous use of a radio resource by a primary and secondary system with tolerable levels of mutual interference;

Figure 4 shows how the transmission protocol of a secondary system can be modified to permit the measurement of primary system transmission parameters, and interference levels;

Figure 5 shows the primary cell 1 of Figure 2 including two interfering secondary systems; and

Figure 6 shows another embodiment of the present invention.

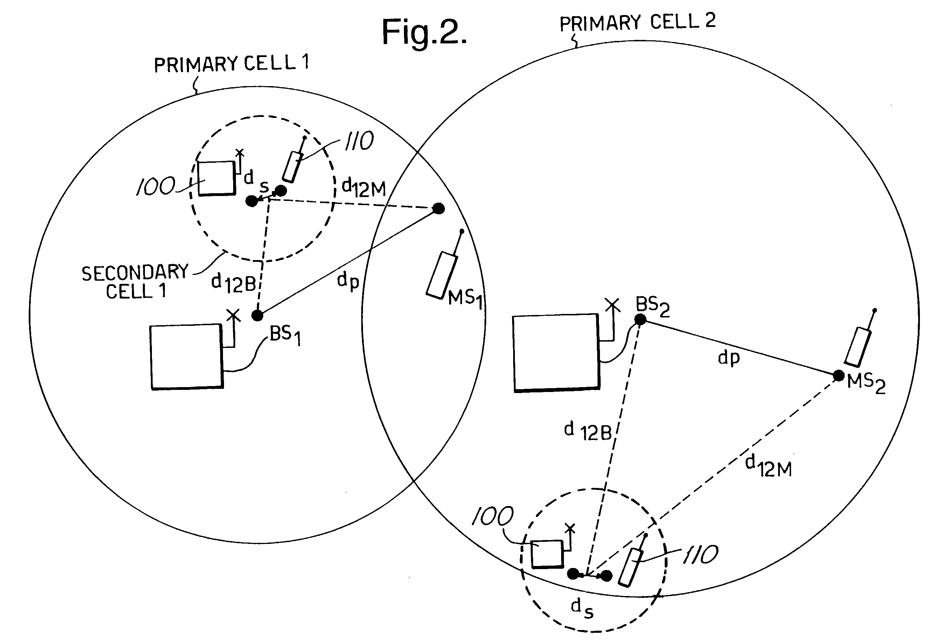

Figure 2 shows a communication system comprising a primary cellular GSM network in which two base stations $BS_1$ and $BS_2$ are illustrated. Each base station services an associated cell within which primary mobile stations MS can communicate with the network. Within each primary cell a secondary cordless system is located each secondary system comprises a secondary base station 100 which serves a secondary cell within which a secondary mobile station 110 can communicate with the secondary base station 100.

The basic theory of this embodiment of the invention is analysed with reference to a single primary cell. The following relevant parameters are defined as follows:

Transmitter RF power levels

$P_{MP}$ = X power level of primary mobile station
$P_{BP}$ = TX power level of primary base station
$P_{MS}$ = TX power level of secondary mobile station
$P_{BS}$ = TX power level of secondary base station

Received RF power (i.e. carrier) levels

$C_{MP}$ = receiver carrier at primary mobile station
$C_{BP}$ = receiver carrier at primary base station
$C_{MS}$ = receiver carrier at secondary mobile station
$C_{BS}$ = receiver carrier at secondary base station

Interface levels between secondary and primary usages

$I_{MP}$ = received interference at primary mobile station
$I_{BP}$ = received interference at primary base station
$I_{MS}$ = received interference at secondary mobile station
$I_{BS}$ = received interference at secondary base station
$I_{MPa}$ = allowed received interference at primary mobile station
$I_{BPa}$ = allowed received interference at primary base station

Distances

$d_p$ = Distance between primary mobile and base stations
$d_s$ = Distance between secondary mobile and base stations
$d_{12M}$ = Distance between primary mobile and secondary system
$d_{12B}$ = Distance between primary base and secondary system

For the purpose of the following theory, it is assumed that $d_s \ll d_p$ i.e the second radio range is negligible to the primary one, whereby the distances from the secondary mobile station 110 and base station 100 to the primary system components are more or less the same. The distances $d_{12M}$ and $d_{12B}$ would always be defined between the mutually interfering parts of the primary and secondary systems. The distance $d_{12B}$ is defined between the primary base station $BS_1$, and secondary mobile station 110 because the primary base station $BS_1$ interferes with the secondary mobile station 110 and vise versa. Similarly, the distance $d_{12M}$ would be defined between the primary mobile station $MS_1$ and the secondary base station 110 because these are the potential interferers.

Should the secondary radio range not be negligible compared to the primary radio range, the following treatment will be readily expandable by those skilled in the art.

Use is made of the well known radio wave propagation model expressed, in the simplified form, as

$$P_{RX} = P_{TN} - A_0 - 25*\log_{10}(d) \tag{1}$$

where $P_{RX}$ is the received signal (designed carrier or undesired interface) level in dB scale, $P_{TX}$ is the transmitted signal level in dB scale, $A_0$ is a constant in dB related to frequency and antenna gain, and d is the distance between transmitter and receiver in meters. Typical values are $P_{TX}$ = 30 dBm and $A_0$- 38 at 2GHz. Expressed in a linear scale, the same equation is

$$P_{rx} = P_{tx}k10^{-2.5\log_{10}(d)} \tag{2}$$

where

$$k = 10^{-A_0/10}$$

Using the parameters defined above, the desired signal and undesired signal levels can be defined as

$$C_{MP} = P_{BP} - A_0 - 2.5\log_{10}(d_p)$$

$$\tag{3}$$

$$I_{MP} = P_{BS} - A_0 - 2.5\log_{10}(d_{12M})$$

$$I_{BP} = P_{MS} - A_0 - 25\log_{10}(d_{12B})$$

$$(4)$$

$$C_{MS} = P_{BS} - A_0 - 25\log_{10}(d_s),$$

$$I_{MS} = P_{BP} - A_0 - 25\log_{10}(d_{12B})$$

$$(5)$$

$$C_{BP} = P_{MP} - A_0 - 25\log_{10}(d_p)$$

and

$$C_{BS} = P_{MP} - A_0 - 25\log_{10}(d_s)$$

$$(6)$$

$$I_{BS} = P_{MP} - A_0 - 25\log_{10}(d_{12m})$$

Particularly, the co-channel interference levels in the four transceiver systems can be defined as

$$\frac{C}{I}(BP) = P_{NP} - P_{MS} - 25\log_{10}\frac{d_p}{d_{12B}}$$

$$(7)$$

$$\frac{C}{I}(MP) = P_{BP} - P_{BS} - 25\log_{10}\frac{d_p}{d_{12M}}$$

$$\frac{C}{I}(BS) = P_{MS} - P_{MP} - 25\log_{10}\frac{d_s}{d_{12M}}$$

$$\frac{C}{I}(MS) = P_{BS} - P_{BP} - 25\log_{10}\frac{d_s}{d_{12B}}$$

As the power levels above are defined in dB scale, the above C/I-values in dB can be expressed with absolute power values with the following set of equations

$$\frac{C}{I}(MP) = 10\log_{10}\frac{P_{PB}}{P_{BS}}(\frac{d_{12M}}{d_p})^{2.5}$$

$$(8)$$

$$\frac{C}{I}(BP) = 10\log_{10}\frac{P_{MP}}{P_{MS}}(\frac{d_{RB}}{d_p})^{2.5}$$

$$\frac{C}{I}(MS) = 10\log_{10}\frac{P_{BS}}{P_{BP}}(\frac{d_{12B}}{d_s})^{2.5}$$

$$\frac{C}{I}(MB) = 10\log_{10}\frac{P_{MS}}{P_{MP}}(\frac{d_{RM}}{ds})^{2.5}$$

A simplified numerical example can be attained by setting acceptable co-channel interference levels in all four transceivers to be at 10 dB, resulting in a set of inequalities

$$\frac{P_{BP}}{P_{PS}}(\frac{d_{12M}}{d_p})^{2.5} > 10$$

$$(9)$$

$$\frac{P_{MP}}{P_{MS}}(\frac{d_{RB}}{d_p})^{2.5} > 10$$

$$\frac{P_{BS}}{P_{BP}}(\frac{d_{12B}}{ds})^{2.5} > 10$$

$$\frac{P_{MS}}{P_{MP}}(\frac{d_{RM}}{ds})^{2.5} > 10$$

Acceptable operation is possible where all the inequalities (9) are valid.

The practical limits are set by the primary radio range and the general interface level within the radio environment. The following simplified example gives some indication for a numerical interpretation: $d_p$ = 2 km, $d_{12M}$ = $d_{12B}$ = 1 km, $A_0$ = -40 dB and the required C for the primary link is -92.5 dBm with a C/I of 10 dB. This defines a symmetric power level of +30 dB for $P_{MP}$ and $P_{BP}$. In order to achieve a 10 dB C/I for the primary system's receivers for $d_{12M}$, $d_{12B}$ of 1 km, the maximum power for $P_{BS}$ = $P_{MS}$ (symmetric case assumed for secondary usage as well) will result in a

$$P_{MS} = P_{BS} \leq + 12.5 dBm$$

(or 18mW). As at this point, the interference level from primary system to the secondary mobile and base stations is -85 dBm, so that a carrier signal level of -75 dBm is required for the secondary receivers in order to achieve the required C/I of 10 dB. Accordingly, the secondary radio range can be

$$d_s = 10^{(P_{MS}-A_0)/25} = 80\, meters$$

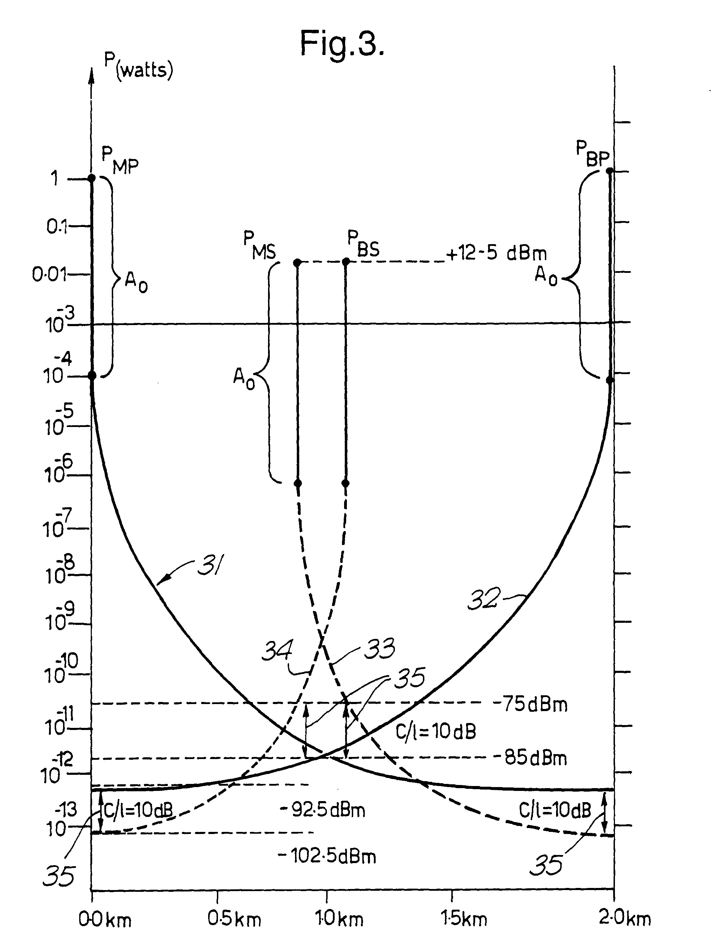

This situation is shown in Figure 3, where the transmitter power levels of all four transceivers are shown as a function of the distance from the primary base station (at 0 km). For simplicity, it is assumed that the primary mobile station is at 2 km distance from the primary base station. The secondary system is located in the middle of a straight line between the primary base and mobile stations, at 1 km distance from both. $A_0$ is the attenuation form transmitter antenna to a mobile antenna at 1 meters distance, and is assumed to be 40 dB. The curved line 31 shows the signal level from primary base station to a primary mobile station as a function of the distance, and the line 32 shows the same from the primary mobile station. At 1 km distance, this level is -85 dBm, and at 2 km this level is -92.5 dBm. The secondary transmitters, being 1 km apart from both primary base and mobile stations, are 80m apart from each other. Their output power + 12.5 dBm results in a signal level of -75 dBm at secondary receivers (curved lines 33 and 34), and in a signal level of - 102.5 dBm at primary receivers. Thus, at all four transceiver points of the system, the required 10 dB C/I is reached, as drawn by bars 35 in Figure 3.

To some extent, the achievable secondary radio range is reduced by the necessary safety margins, but on the other hand, the possibility of secondary usage is increased by the fact that the primary mobile user and the secondary system are very seldom on the same geometrical line between primary base station and mobile station. Also it is known in the art that the attenuation for short radio range (say, below 100m) is not to the power of -2.5 but rather to the power of -2. This improves the possibility of achieving a reasonable radio range within the secondary system.

Referring to Figure 2 again, it will now be appreciated that the power margins for radio resource re-use by the secondary system in the primary cell 1 are much narrower than are the margins for the secondary system in the primary cell 2.

When implementing the secondary usage in practice, the above distances are not precisely known, nor the precise power levels. Therefore, an intelligent algorithm is needed to define for a given $P_{MS}$ and $P_{BS}$ maximum values of which would result in an acceptable level of interference in primary system communications on the basis of easily achievable primary system information.

With reference to the primary cell 1 of Figure 2, the algorithms is as follows:

For the secondary system

1. Detect primary system transmission parameters and secondary system interference levels.

The base station 100 of the secondary system monitors a set of primary channels in the uplink direction, and searches for message allowing for the secondary usage and decodes associated public (broadcast type of) signalling, particularly the timing advance, indicating $d_p$, the actual $P_{MP}$, indicating $d_{12B}$ and $I_{MPa}$. The base station 100 also measures the received interference levels $I_{BS}$

The secondary mobile station 110 of the secondary system performs a similar role in relation to the downlink direction by decoding $I_{BPa}$, and $P_{BP}$. The secondary mobile station 110 also measures the received interference level $I_{MS}$

It is advantageous for the primary mobile $MS_1$ signal levels to be determined by the secondary base station 100, and the primary base stations $BS_1$ signal levels to be determined by the secondary mobile station 110 for the following reasons. Firstly, though the distance between the secondary mobile and base station may be insignificant within the primary system, the radio environments may differ strongly, in particular there may be obstructions (e. g. a wall) between the secondary mobile and base station. Secondly, performing the measurements in this way the transceivers need not have reception at their own transmitter frequencies.

2. If neither $P_{MP}$ nor $P_{BP}$ can be detected nor decoded, secondary usage at a certain maximum $P_{MS}$ is allowed, respectively. This power can be as an example 25 mW. i.e. the power class 1 of GSM.

In practice, this situation may result from not only physical distance but also directed antenna radiation patterns and/or obstructions, particularly walls, between the primary and secondary systems.

3. If $P_{MP}$ can be detected by the secondary system at an interference level $I_{BS}$, and is indicated to be radiated at a power of $P_{MP}$ a following virtual distance between mobile station and the secondary system is estimated

$$d_{12M} = 10^{(P_{MP}-A_0-I_{BS}-M)/25} \tag{10}$$

with M denoting a safety margin, usually expressed in dB. Due to the safety margin, this formula under-estimates $d_{12M}$. The virtual distance may differ from the actual physical one due to varying radio propagation constant, directed radiation, reflections or obstructions. However, it enables the setting of a correct maximum level of $P_{BS}$ for a required C/I ratio of $Q_1$ and a tolerable interference of $I_{MPa}$.

$$P_{BS} \leq I_{MP} + A_0 + 25\log_{10} d_{12M} - Q_1 \tag{11}$$

which reduces to a simple algebraic expression in decibel scale

$$P_{BS} \leq P_{MP} - Q_1 - M + I_{MP} - I_{BS} \tag{12}$$

As a numerical example, $I_{MPa}$ is set by the primary system to be -100 dBm, $I_{BS}$ is measured to be -90 dBm, the desired carrier/interference radio Q is 10 dB, the safety margin 5 dB and the $P_{MP}$ of 30 dBm. Substituting these values in the equation 12 results in $P_{BS}$ of 5 dBm (approximately 3 mW). With the assumed propagation this results in a radio range of 63 m which is very good for e.g. a GSM based indoor access.

4. Similarly to step 3, if $P_{BP}$ can be detected by the secondary system at an interference level of $I_{MS}$ at the secondary system's receiver, the virtual distance $d_{12B}$ can be estimated as

$$d_{12M} = 10^{(P_{MP}-A_0-I_{BS}-M)/25} \tag{13}$$

and further, for a required C/I of $Q_2$ and a tolerable interference level of $I_{BPa}$ at the primary base station, the maximum power of the secondary mobile can be set as

$$P_{MS} \leq I_{BP} + A_0 + 25\log_{10}d_{12M} - Q_2,$$

and combining the above two expressions we get

$$P_{MS} \leq P_{BP} - Q_2 - M + I_{MS} - I_{BP} \tag{14}$$

5. Once the maximum transmitter power levels for the secondary system have been defined, the secondary system affords normal communication between the secondary base station and the mobile station below the calculated maximum power levels. If the detected interference levels in the secondary system i.e. $I_{MS}$ and $I_{BS}$, require raising the transmitter powers above the maximum levels, then secondary communication on the radio resource is discontinued.

<u>For the primary system</u>

1. Measure the interference levels in primary system communications and dynamically adjust the values of $I_{MPa}$ and $I_{BPa}$, if the interference level, as measured, departs from acceptable limits.

2. Transmit on public (broadcast type of) signalling $I_{MPa}$ and $I_{BPa}$ as well as the normal transmission parameters for decoding by the secondary system.

Using the above method, many radio resource management strategies are possible in selecting the given radio resource.

For example, one management strategy involves each secondary system creating and maintaining a list of usable radio resource using the above method. The order of priority of the list is dictated by the allowed maximum transmitter power. First priority is given to the radio resource with the highest allowed power. Using this mechanism, a free and usable radio resource can always be found if such exists. By using the list of usable radio resources, a connection A between the $BS_1$ and $MS_1$ is established, and should this connection become interfered with, the system switches to the next radio resource on the list. In another management strategy, the radio resources can be selected at random or in a frequency hopping pattern.

When applying the above algorithm, it is necessary, during the time of actual coexistence between secondary and primary usage, to monitor signal and interference levels across the systems. The manner in which this is achieved depends on the transmission protocol of the systems in question.

For FDMA systems, this can be achieved with short interruptions in transmissions with simultaneous and synchronised measurement of the interference level. Because practically all FDMA and TDMA systems are designed to be able to operate at the sensitivity limit of the receivers, good initial values of $I_{MPa}$ and $I_{BPa}$ are the values which facilitate the desired C/I at the sensitivity limit, e.g. if the sensitivity limit in GSM is -101 dBm, and the required C/I is 6 dB then both $I_{MPa}$ and $I_{BPa}$ can initially be assumed as -107 dBm.

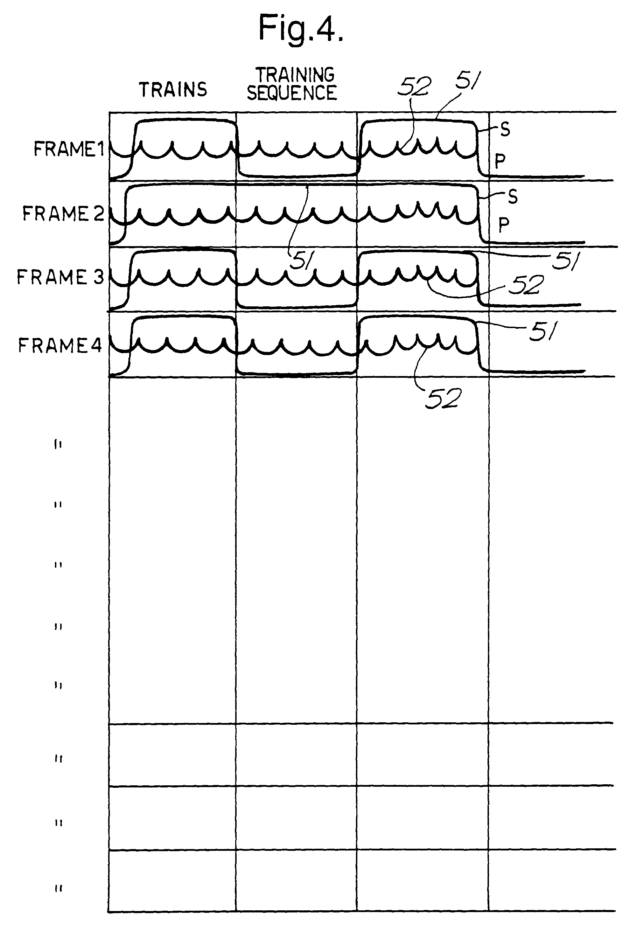

In a fully loaded TDMA system i.e. when all time slots and frequencies are being used, the secondary system (s) can monitor the primary usage during the training sequences. This is done by removing a certain amount of e.g. every one out of four (as shown in Figure 4) training sequences in the secondary system. The smooth line 51 shows the power level of the secondary system, and the curled line 52 that of the primary system, as received by a receiver in the secondary system. In this example, the training sequence is in the middle of the burst, and the information forms the beginning and the end of the burst. Within the four time slots from consecutive frames shown in Figure 4, the secondary system uses its own training sequence only in the time slot of frame 2, and uses the time slots in frames 1, 3 and 4 for the monitoring of other systems (i.e. the primary usage). The amount of time slots within the frame is arbitrary, e.g. 8 as in the GSM system.

This can be done without compromising the communication between secondary mobile and base stations because the secondary system is not supposed to support fast mobile users whereby the channel decoding parameters attained during the previous training sequence(s) can be used for the bursts where the training sequence is removed and this time used for the monitoring of the primary system. Similarly, for the communication between primary and secondary system(s), a BCCH, CCCH or other type of signalling can be used.

In a DCMA based system, the monitoring of the primary system by the secondary system can be easily achieved by switching the codes. Similarly as in FDMA and TDMA based systems, in CDMA based systems the initial values of $I_{MPa}$ and $I_{BP}$ are founded on the assumption that the primary system is operating at the receiver sensitivity limits. In the further operation of the system, the primary system will communicate $I_{MPa}$ $I_{BPa}$ $P_{MP}$ and $P_{BP}$ values to the secondary system with using the well known control channel mechanisms of CDMA. Thus, there is afforded as substantial extension and simplification to a CDMA system known in the art where all transmitters within a cell are under extensive closed loop transmitter power control.

When a primary cell contains more than one secondary system but the secondary systems are in non-interfering relation with each other, then the method as previously described can be applied directly to such a system. If it possible that the two secondary systems can interfere and then it is desirable to extend the method as previously described to cope with that situation.

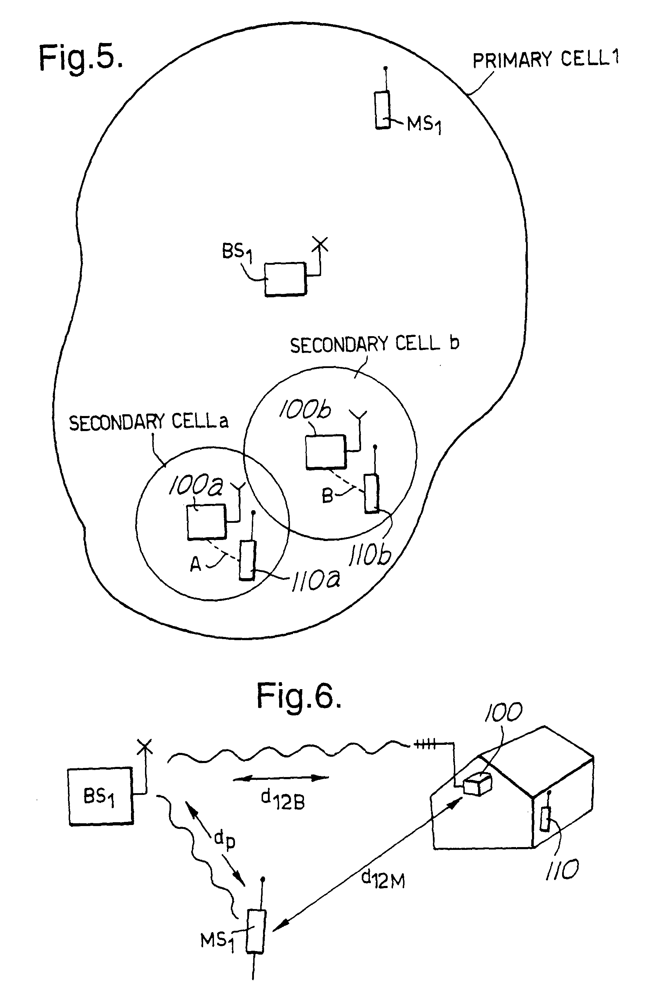

Figure 6 shows the primary cell 1 of Figure 2 including two secondary systems a, b. The non-interfering behaviour towards the primary system is ensured by the method as already described.

The application of the method in this situation assumes that

1. Each base station which is not identified to be a primary system is a secondary system and carry a unique identification code.
2. The secondary base stations are fixed (non-moveable) but the amount, locations and activity may change form time to time.
3. The overall system solution facilitates a BCCH/CCCH in such a way that secondary systems can communicate with each other.
4. All base stations are continuously active and thus have a memory function.
5. A base station recognises when a secondary mobile station is in the immediate proximity of the base station it belongs to.
6. Each base station signals its existence and maximum range with a broadcast message (e.g. on BCCH) and with using the maximum power allowed to that secondary system.

With these assumptions in mind, a given secondary system monitors through its base and mobile stations whether there are other secondary systems in the same radio environment, and therefore a potential source of interference, and maintains a list thereof. If there are none, a secondary system is defined to be in a interference free space.

It has to be recalled that each secondary system operates within the radio resource that are identified to be available from the primary system and, hence, different secondary systems may have identified different but certainly partially overlapping radio resource. For each secondary system on the list, the given secondary system decodes the transmission parameters of each of the secondary systems on the list, including an allowable interference parameters equivalent to $I_{MPa}$ and $I_{MPb}$ in the primary system. For convenience, these same parameters will be referred to by the same label.

When the connection A interferes with another connection, e.g. connection B this results in a reduction of allowable interference level IMPa signalled in the connection B and decoded by the connection A. Consequently, the allowable maximum power levels in connection A would decrease. This might then necessitate the secondary system A selecting a new radio resource as the maximum power levels would be too low for acceptable communication in secondary system A.

A new connection is established only if it is estimated to be a non-interfering to all neighbouring systems and connections. Should an interference still occur the interfering system (e.g. connection A) would be requested by the interfered connection to reduce its power level until reaching a tolerable interference situation, or then switching into a new radio resource. Thus the methods results in a graceful degradation of connection and/or radio range and fully avoid any disturbing behaviour.

An advantage of this system lies with its bi-directional interference control by both mobile and base station. This results in a seamless interference control and facilitates increased radio link and system capacity via asymmetric power levels for mobile and base stations. This is of a particular significance when using frequency division duplex methods.

In establishing a list of potentially interfering systems, a mobile station of one secondary system recognises several secondary base stations, this mobile can act as a relay station between the secondary systems, and establish the exchange of identity codes. Thus, each secondary system is aware of other secondary systems. If this situation is reached with the mobile station being in the immediate proximity of the base station it belongs to, the other detected secondary system are considered to be potential strong interferers.

Should several secondary system try to use the same radio resource, the total interference to PS is controlled by the common IMPa and IBPa (whichever part of the PS becomes interfered), and the independent execution of the algorithms in each secondary system. This algorithm treats all secondary system in an equal way i.e. if the allowed interference level IMPa or IBPa is reduced, there is a high likelihood that the resulting calculated maximums secondary system transmitter power levels will on the first hand affect the dominating interferer, assumed to be the one which uses the maximum allowed power level.

With using the present method, the secondary systems are able to align one or several radio resources into its use simultaneously with parallel use in the primary system.

Figure 6 shows an embodiment of the invention in which the secondary system is an indoor cordless system. The secondary base station 100 is acting as a relaying repeater station for providing local access to the primary system telecommunication network. It may also allow one or more mobile stations to communicate locally with each other.

Thus, it will be appreciated that, in summary, the system described above is applicable to provision of a cordless type of access, or indoor system within a cellular system, and also to extending a radio cell capacity, range or both with the implementation of secondary, repeater type of cells within the primary cell. Hitherto, only spread spectrum, particularly CDMA radio access methods allow for coexistence on mutually interfering radio connections. The above method makes the same possible and in a more flexible and controllable way for any radio access method.

**Claims**

1.   A communication system, comprising:

a primary cellular radio system;

a secondary radio system located within a cell of the primary system and including a base station, a mobile station and means for calculating, in respect of a primary radio resource, secondary system transmission power levels which would result in an acceptable level of interference in the primary system communications in said cell, the secondary radio system being adapted to:

(i) calculate, in respect of the primary system radio resource, maximum secondary system transmission power levels which would result in an acceptable level of interference to primary system radio communications in the cell;
(ii) conduct secondary system radio communications at transmission power levels below the calculated maximum levels;

(iii) measure the interference levels affecting the secondary system radio communications; and

(iv) discontinue secondary system radio communication on said primary system radio resource if the measured interference levels to secondary system radio communications exceed a permissible threshold while the secondary system is operating at the maximum secondary system transmission power levels.

2. A method for performing radio resource management in a communication system comprising a primary cellular radio system and a secondary radio system located within a cell of the primary system, wherein the secondary system comprises a base station and a mobile station, the method involving the secondary system performing the steps of:

(i) calculating, in respect of the primary system radio resource, maximum secondary system transmission power levels which would result in an acceptable level of interference to primary system radio communications in the cell;

(ii) conducting secondary system radio communications at transmission power levels below the calculated maximum levels;

(iii) measuring the interference levels affecting the secondary system radio communications; and

(iv) discontinuing secondary system radio communication on said primary system radio resource if the measured interference levels to secondary system radio communications exceed a permissible threshold while the secondary system is operating at the maximum secondary system transmission power levels.

3. A method as in Claim 2, wherein the secondary system decodes primary system transmission parameters known for the primary cellular radio system and uses the primary system transmission parameters in calculation step (i).

4. A method as in claim 3, wherein the decoded primary system transmission parameters include a signal indicative of the acceptability of the interference levels in the primary system communication, and the method includes the further step of the primary system adjusting the signal in response to measured interference levels in primary system communications.

5. A method as in Claim 4, wherein the decoded primary system transmission parameters include primary system transmission power level parameters and timing advance signals.

6. A method as in any of Claims 2 to 5, wherein the said primary cell includes more than one secondary system.

7. A method as in any of Claims 2 to 6, further comprising the steps of the secondary radio system determining the presence of other potentially interfering secondary systems;

decoding transmission parameters of the potentially interfering systems including a parameter indicative of the acceptability of interference levels in the respective secondary systems; and

including in the calculation of secondary system maximum transmission power levels further calculations to ensure that the calculated secondary system maximum transmission power levels would not also result in levels of interference greater than the decoded parameter indicative of the acceptability of interference levels in the other potentially interfering secondary system or systems.

8. A method for managing radio resources in a communication system comprising a plurality of radio systems, each comprising a base station and a mobile station, each radio system performing the steps of:

determining the presence of other potentially interfering radio systems;

decoding the transmissions of the other potentially interfering radio systems to establish transmission parameters for the other potentially interfering radio systems, said transmission parameter including at least a parameter indicative of the acceptability of interference levels affecting communications between the base station and the mobile station of the potentially interfering radio system;

for a given radio resource, calculating taking into account said parameter indicative of acceptable interference maximum transmission power levels for said radio system which would result in an acceptable level of interference in the other potentially interfering radio system or systems; and,

EP 0 872 046 B1

using said radio resource in said radio system, conducting communications at power levels below the calculated maximum transmission power levels.

**Patentansprüche**

1. Kommunikationssystem, umfassend:

   ein primäres Zellenfunksystem;
   ein sekundäres Funksystem, das in einer Zelle des primären Systems angeordnet ist und eine Basisstation, eine Mobilstation und eine Berechnungseinrichtung enthält, um in bezug auf eine primäre Funkressource Übertragungsleistungspegel des sekundären Systems zu berechnen, die annehmbare Störungspegel bei den Kommunikationen des primären Systems in der Zelle zur Folge haben, wobei das sekundäre Funksystem so beschaffen ist, daß es:

   (i) die maximalen Übertragungsleistungspegel des sekundären Systems in bezug auf die Funkressource des primären Systems, die einen annehmbaren Pegel der Störungen auf Funkkommunikationen des primären Systems in der Zelle zu Folge haben würden, berechnet;
   (ii) die Funkkommunikationen des sekundären Systems bei Übertragungsleistungspegeln unter den berechneten maximalen Pegeln führt;
   (iii) die Störungspegel, die die Funkkommunikationen des sekundären Systems beeinflussen, mißt; und
   (iv) die Funkkommunikationen des sekundären Systems auf der Funkressource des primären Systems unterbricht, wenn die gemessenen Störungspegel auf Funkkommunikationen des sekundären Systems einen zulässigen Schwellenwert übersteigen, während das sekundäre System bei den maximalen Übertragungsleistungspegeln des primären Systems arbeitet.

2. Verfahren zum Ausführen des Funkressourcenmanagements in einem Kommunikationssystem, das ein primäres Zellenfunksystem und ein sekundäres Funksystem umfaßt und ein sekundäres Funksystem in einer Zelle des primären Systems angeordnet ist und das sekundäre System eine Basisstation und eine Mobilstation enthält, wobei das Verfahren, das das sekundäre System einschließt, die folgenden Schritte ausführt:

   (i) Berechnen von maximalen Übertragungsleistungspegeln des sekundären Systems in bezug auf die Funkressource des primären Systems, die einen annehmbaren Pegel der Störungen auf Funkkommunikationen des primären Systems in der Zelle zur Folge haben würden;
   (ii) Führen der Funkkommunikationen des sekundären Systems bei Übertragungsleistungspegeln unter den berechneten maximalen Pegeln;
   (iii) Messen der Störungspegel, die die Funkkommunikationen des sekundären Systems beeinflussen; und
   (iv) Unterbrechen der Funkkommunikationen des sekundären Systems auf der Funkressource des primären Systems, wenn die gemessenen Störungspegel auf Funkkommunikationen des sekundären Systems einen zulässigen Schwellenwert übersteigen, während das sekundäre System bei den maximalen Übertragungsleistungspegeln des primären Systems arbeitet.

3. Verfahren nach Anspruch 2, bei dem das sekundäre System Übertragungsparameter des primären Systems, die für das primäre Zellenfunksystem bekannt sind, decodiert und für den Berechnungsschritt (iv) verwendet.

4. Verfahren nach Anspruch 3, bei dem die decodierten Übertragungsparameter des primären Systems ein Signal enthalten, das die Annehmbarkeit der Störungspegel bei Kommunikationen des primären Systems angibt, und das Verfahren den weiteren Schritt des primären Systems zum Einstellen des Signals als Antwort auf gemessene Störungspegel bei Kommunikationen des primären Systems enthält.

5. Verfahren nach Anspruch 4, bei dem die decodierten Übertragungsparameter des primären Systems Parameter des Übertragungsleistungspegels des primären Systems und Zeitvorlaufsignale enthalten.

6. Verfahren nach einem der Ansprüche 2 bis 5, bei dem die Primärzelle mehr als ein sekundäres System enthält.

7. Verfahren nach einem der Ansprüche 2 bis 5, das ferner die folgenden Schritte des sekundären Funksystems umfaßt: Bestimmen des Vorhandenseins weiterer potentiell störender sekundärer Systeme;

13

Decodieren von Übertragungsparametern der potentiell störenden Systeme, einschließlich eines Parameters, der die Annehmbarkeit von Störungspegeln in den entsprechenden sekundären Systemen angibt; und Aufnehmen weiterer Berechnungen in die Berechnung der maximalen Übertragungsleistungspegel des sekundären Systems, um sicherzustellen, daß die berechneten maximalen Übertragungsleistungspegel des sekundären Systems keine Pegel von Störungen zur Folge haben, die größer sind als der decodierte Parameter, der die Annehmbarkeit von Störungspegeln in dem weiteren potentiell störenden sekundären System oder in solchen Systemen angibt.

8. Verfahren für das Management von Funkressourcen in einem Kommunikationssystem, das mehrere Funksysteme enthält, die jeweils eine Basisstation und eine Mobilstation enthalten, wobei jedes Funksystem die folgenden Schritte ausführt:

Bestimmen des Vorhandenseins weiterer potentiell störender Funksysteme;
Decodieren der Übertragungen der weiteren potentiell störenden Funksysteme, um Übertragungsparameter für die weiteren potentiell störenden Funksysteme aufzustellen, wobei die Übertragungsparameter wenigstens einen Parameter enthalten, der die Annehmbarkeit von Störungspegeln angibt, die Kommunikationen zwischen der Basisstation und der Mobilstation des potentiell störenden Funksystems beeinflußt;
für eine vorgegebene Funkressource unter Berücksichtigung des Parameters, der die annehmbare Störung angibt, Berechnen der maximalen Übertragungsleistungspegel für das Funksystem, die einen annehmbaren Pegel von Störungen in dem weiteren potentiell störenden System oder in solchen Systemen zur Folge haben würden; und
Führen von Kommunikationen in dem Funksystem unter Verwendung der Funkressource bei Leistungspegeln unter den berechneten maximalen Übertragungsleistungspegeln.

## Revendications

1. Système de communication, comprenant :

un système radio cellulaire primaire,
un système radio secondaire situé à l'intérieur d'une cellule du système primaire et comprenant une station de base, une station mobile et un moyen destiné à calculer, en fonction d'une ressource radio primaire, des niveaux de puissance d'émission de système secondaire qui résulteraient en un niveau acceptable d'interférence dans les communications du système primaire dans ladite cellule, le système radio secondaire étant conçu pour :

(i) calculer en fonction de la ressource radio du système primaire, des niveaux de puissance d'émission maximums du système secondaire, qui résulteraient en un niveau acceptable d'interférence avec des communications radio du système primaire dans la cellule,
(ii) exécuter des communications radio du système secondaire à des niveaux de puissance d'émission en dessous des niveaux maximums calculés,
(iii) mesurer les niveaux d'interférence affectant les communications radio du système secondaire, et
(iv) interrompre une communication radio du système secondaire sur ladite ressource radio du système primaire si les niveaux d'interférence mesurés avec des communications radio du système secondaire dépassent un seuil admissible alors que le système secondaire fonctionne à des niveaux de puissance d'émission maximums du système secondaire.

2. Procédé destiné à exécuter une gestion des ressources radio dans un système de communication comprenant un système radio cellulaire primaire et un système radio secondaire situé à l'intérieur d'une cellule du système primaire, dans lequel le système secondaire comprend une station de base et une station mobile, le procédé impliquant que le système secondaire exécute les étapes consistant à :

(i) calculer, en fonction de la ressource radio du système primaire, des niveaux de puissance d'émission maximums du système secondaire qui résulteraient en un niveau acceptable d'interférence pour des communications radio du système primaire dans la cellule,
(ii) exécuter des communications radio du système secondaire à des niveaux de puissance d'émission en dessous des niveaux maximums calculés,
(iii) mesurer les niveaux d'interférence affectant les communications radio du système secondaire, et

(iv) interrompre une communication radio du système secondaire sur ladite ressource radio du système primaire si les niveaux d'interférence mesurés pour des communications radio du système secondaire dépassent un seuil admissible alors que le système secondaire fonctionne aux niveaux de puissance d'émission maximums du système secondaire.

3. Procédé selon la revendication 2, dans lequel le système secondaire décode des paramètres d'émission du système primaire connus pour le système radio cellulaire primaire et utilise des paramètres de transmission du système primaire dans les calculs de l'étape (i).

4. Procédé selon la revendication 3, dans lequel les paramètres d'émission décodés du système primaire comprennent un signal indicatif de la possibilité d'acceptation des niveaux d'interférence dans la communication du système primaire, et le procédé comprend l'étape supplémentaire du système primaire consistant à ajuster le signal en réponse à des niveaux d'interférence mesurés dans les communications du système primaire.

5. Procédé selon la revendication 4, dans lequel les paramètres d'émission décodés du système primaire comprennent des paramètres de niveaux de puissance d'émission du système primaire et des signaux d'avance de synchronisation.

6. Procédé selon l'une quelconque des revendications 2 à 5, dans lequel ladite cellule primaire comprend plus d'un seul système secondaire.

7. Procédé selon l'une quelconque des revendications 2 à 6, comprenant en outre les étapes consistant à déterminer par le système radio secondaire la présence d'autres systèmes secondaires potentiellement interférents,

décoder des paramètres de transmission des systèmes potentiellement interférents comprenant un paramètre indicatif de la possibilité d'acceptation des niveaux d'interférence dans les systèmes secondaires respectifs, et inclure dans le calcul des niveaux de puissance d'émission maximums du système secondaire d'autres calculs pour assurer que les niveaux de puissance d'émission maximums du système secondaire calculés ne résulteront pas également en des niveaux d'interférence supérieurs au paramètre décodé indicatif de la possibilité d'acceptation des niveaux d'interférence dans l'autre système ou les autres systèmes secondaires potentiellement interférents.

8. Procédé destiné à gérer des ressources radio dans un système de communication comprenant une pluralité de systèmes radio, chacun comprenant une station de base et une station mobile, chaque système radio exécutant les étapes consistant à :

déterminer la présence d'autres systèmes radio potentiellement interférents,
décoder les transmissions des autres systèmes radio potentiellement interférents pour établir des paramètres de transmission pour les autres systèmes radio potentiellement interférents, ledit paramètre de transmission comprenant au moins un paramètre indicatif de la possibilité d'acceptation des niveaux d'interférence affectant des communications entre la station de base et la station mobile du système radio potentiellement interférent, pour une ressource radio donnée, calculer en prenant en compte ledit paramètre indicatif d'une interférence acceptable, des niveaux de puissance d'émission maximums pour ledit système radio qui résulteraient en un niveau d'interférence acceptable dans l'autre système ou les autres systèmes radio potentiellement interférents, et,
utiliser ladite ressource radio dans ledit système, en exécutant des communications à des niveaux de puissance en dessous des niveaux de puissance d'émission maximums calculés.

# Fig.1.

FREQUENCY RE-USE PATTERN
EXAMPLE IN A CONVENTIONAL
HEXAGONAL FDMA CALL
STRUCTURE.

Fig.2.

# Fig.3.

# Fig.4.

Fig.5.

PRIMARY CELL1

MS$_1$

BS$_1$

SECONDARY CELL b

SECONDARY CELL a

100b

100a

B

A

110a

110b

Fig.6.

100

BS$_1$

d$_{12B}$

d$_p$

d$_{12M}$

110

MS$_1$